# EUROPÄISCHE PATENTSCHRIFT

(11) **EP 1 609 556 B1**
(45) Veröffentlichungstag und Bekanntmachung des Hinweises auf die Patenterteilung: **29.08.2007**
(21) Anmeldenummer: 05013547.4
(22) Anmeldetag: 18.05.2001
(51) Int. Cl.: B23K 26/14

(54) **Modularer Laser-Hybrid-Schweisskopf**
Modular hybrid laser welding head
Tête de soudage hybride laser modulaire

(30) Priorität: 16.11.2000 AT 19362000
(43) Veröffentlichungstag der Anmeldung: 28.12.2005
(62) Teilanmeldung aus: 01933456.4
(73) Patentinhaber: Fronius International GmbH, 4643 Pettenbach (AT)
(72) Erfinder: Staufer, Herbert, 4470 Enns (AT); Rührnössl, Manfred, 4030 Linz (AT); Miesbacher, Gerhard, 4600 Thalheim bei Wels (AT); Hubinger, Manfred, 4550 Kremsmünster (AT); Haberler, Wolfgang, 4655 Vorchdorf (AT); Berger, Ewald, 4600 Wels (AT)
(74) Vertreter: Secklehner, Günter

(56) Entgegenhaltungen:
- WO-A-00/24543

## Beschreibung

Die Erfindung betrifft einen modularen Laser-Hybrid-Schweißkopf, bei dem an zumindest einem Montageelement Komponenten, wie ein Laser bzw. eine Laseroptik oder eine optische Fokussiereinheit und Elemente eines Brenners bzw. eines Schweißbrenners für einen Fügeprozess angeordnet sind und dieser eine Vorrichtung zur Bildung eines Crossjets, die über zumindest eine Zuleitung und eine Ableitung mit einer Druckluftversorgungsanlage verbunden ist, aufweist.

Es sind bereits Vorrichtungen, insbesondere Laser-Hybrid-Schweißköpfe, für einen Laser-Hybrid-Schweißprozess bekannt, bei denen an zumindest einer Montageplatte ein Laser bzw. eine Laseroptik oder eine optische Fokussiereinheit und ein Schweißbrenner angeordnet sind. Dem Laser bzw. der optischen Fokussiereinheit ist dabei eine Crossjet-Leitvorrichtung zur Bildung eines Crossjets zugeordnet, wobei die Crossjet-Leitvorrichtung über zumindest eine Zuleitung und eine Ableitung mit einer Druckluftversorgungsanlage verbunden ist. Durch den so genannten Crossjet werden die entstehenden Schweißspritzer während des Schweißprozesse von der Optik des Lasers bzw. der Laseroptik oder der optischen Fokussiereinheit ferngehalten. Die Anordnung der Zuleitung und der Ableitung erfolgt dabei beiderseits des Lasers bzw. der Laseroptik oder der optischen Fokussiereinheit. Bei einem Schweißprozess mit einer derartigen Vorrichtung wird durch den voreilenden Laser bzw. der Laseroptik oder der optischen Fokussiereinheit die Oberfläche des Werkstückes erwärmt oder durch entsprechende Fokussierung des Fokuspunktes unterhalb der Oberfläche des Werkstückes bereits ein Aufschmelzen bzw. eine Einbrandtiefe durch den Laserstrahl erreicht, wobei durch den nachfolgenden Lichtbogen-Schweißprozess eine weitere Vergrößerung der Einbrandtiefe sowie eine Bildung einer Schweißraupe durch Zufuhr eines Schweißdrahtes bzw. eines Zusatzmaterials durchgeführt wird.

Nachteilig ist hierbei, dass durch beidseitige Zuführung der Zuleitung und der Ableitung ein erheblicher Platzbedarf vorhanden ist, so dass die Baugröße eines derartigen Laser-Hybrid-Schweißkopfes wesentlich vergrößert wird.

Weiters sind Vorrichtungen zur Bildung eines Crossjets bekannt, bei denen beiderseits des Lasers bzw. der Laseroptik oder der optischen Fokussiereinheit ein Austrittselement und ein Eintrittselement für eine zugeführte Druckluft angeordnet sind, so dass ein entsprechender Crossjet, also eine Luftströmung, zwischen dem Austrittselement und dem Eintrittselement zur Aufnahme loser Metallteile gebildet werden kann.

Nachteilig ist hierbei, dass durch einen derartigen Aufbau eine großflächige Ausbildung des Crossjets notwendig ist, so dass ein sehr hoher Unterdruck im Bereich des Crossjets entsteht und somit dieser einen großen Abstand zu einem Schweißprozess mit einer Schutzgasatmosphäre haben muss, um diese nicht anzusaugen.

Das Dokument DE 196 27 803 C1 bezieht sich auf eine Düsenanordnung zum gleichzeitigen Schweißbearbeiten mit einem Laserstrahl und mit einem Lichtbogen, mit einer den Lichtbogen oberhalb eines Werkstücks erzeugenden Schweißelektrode, mit einer den Laserstrahl umhüllenden Düse, die eine Düsenkammer aufweist und von einer Düsenhülle umgeben ist, welche mit der Düsenkammer einem der Gaszuleitung dienenden Ringspalt bildet und innerhalb der die Schweißelektrode angeordnet ist.

In dem Dokument DE 198 13 419 A1 wird ein Schweißbrennersystem, insbesondere für das MIG-MAG-Schweißen mit Schweißautomaten beschrieben. Dabei handelt es sich um ein Schweißbrennersystem, das modular aus den Komponentenschlauchpaket, ein oder mehreren Zwischenmodulen und Brenner aufgebaut ist. Durch den modularen Aufbau sind Anpassungen an unterschiedliche Schweißaufgaben und ein Ersatz beschädigter Einzelteile möglich.

In den Dokumenten US 5 981 901 A, US 5 814 786 A und EP 0 618 037 A sind Verfahren und Vorrichtungen zum Laserschweißen beschrieben, bei denen eine Crossjet-Leitvorrichtung zum Schutz gegen Schweißspritzer eingesetzt wird. Die Crossjet-Leitvorrichtung wird durch ein längliches Gehäuse gebildet, wobei an einer Seite des Gehäuses eine Druckluftversorgungsanlage zur Zuführung von Druckluft angeordnet ist und somit im inneren ein Cross-jet gebildet wird, der an der gegenüberliegenden Seite des Gehäuses aus dem Gehäuse austritt. Weiters weist das Gehäuse eine durchgehende Öffnung für einen sich durch die Öffnung erstreckenden Laserstrahl auf.

Nachteilig ist hierbei, dass eine derartige Ausbildung einer Crossjet-Leitvorrichtung einen hohen Platzbedarf bzw. eine große Baugröße aufweist, da beidseits des Gehäuses die Zu- und Abführung von Druckluft erfolgt. Somit ist ein Einsatz einer derartigen Crossjet-Leitvorrichtung nur bei einem reinen Laser-Schweißprozess möglich.

Weiters ist aus der WO 00/24 543 A ein Laser-Hybrid-Schweißkopf bekannt, bei dem der Laser im Zentrum angeordnet ist. Beidseits des Lasers ist über eine gemeinsame Befestigungsschiene jeweils ein Schweißbrenner angeordnet, der über die Befestigungsschiene verstellbar ist.

Nachteilig ist hierbei, dass bei einem derartigen Aufbau keine Crossjet-Leitvorrichtung eingesetzt werden kann, so dass nach kurzer Schweißzeit durch die entstehenden Schweißspritzer die Laseroptik verschmutzt wird und somit die Laserleistung stark abnimmt.

Der Erfindung liegt die Aufgabe zugrunde, eine Vorrichtung, insbesondere einen Laser-Hybrid-Schweißkopf, für einen Laser-Hybrid-Schweißprozess zu schaffen, bei dem eine kompakte Baugröße und ein einfacher Aufbau des Laser-Hybrid-Schweißkopfes geschaffen wird.

Bei der nachfolgend beschriebenen Vorrichtung für einen Laser-Hybrid-Schweißprozess ist vorgesehen, dass an zumindest einem Montageelement Komponenten, wie ein Laser bzw. eine Laseroptik oder eine optische Fokussiereinheit und Elemente eines Schweißbrenners für einen Lichtbogen-Schweißprozess und/oder einer Zufuhrvorrichtung für einen Schweißdraht, sowie eine Vorrichtung zur Bildung eines Crossjets, die über zumindest eine Zuleitung und eine Ableitung mit einer Druckluftversorgungsanlage verbunden ist, angeordnet sind und die Zuleitung und die Ableitung der Druckluft für den Crossjet zwischen den beiden Komponenten, insbesondere dem Laser bzw. der Laseroptik oder der optischen Fokussiereinheit und den Elementen des Schweißbrenners oder der Zufuhrvorrichtung für den Schweißdraht, angeordnet sind. Vorteilhaft ist hierbei, dass durch die spezielle Ausbildung des Laser-Hybrid-Schweißkopfes erreicht wird, dass keinerlei Leitungen um die einzelnen Komponenten herum und keinerlei Leitungen bis in den Bereich des Schweißprozesses angeordnet sind, da diese alle auf der gegenüberliegenden Seite mit den Komponenten verbunden werden. Damit wird erreicht, dass ein Hängen bleiben des Laser-Hybrid-Schweißkopfes an einem Gegenstand unterbunden wird, da keinerlei abstehende Leitungen um die Komponenten angeordnet sind. Ein wesentlicher Vorteil liegt darin, dass der Laser-Hybrid-Schweißkopf ohne Veränderung des Roboters, insbesondere dessen programmierte Laufbahn, spiegelbildlich eingesetzt werden kann, da auf keine abstehenden Leitungen oder Teile acht genommen werden muss, da der Laser-Hybrid-Schweißkopf symmetrisch zur Befestigung mit dem Roboter, insbesondere mit dem Manipulator des Roboterarms, aufgebaut ist, so dass durch die spezielle Ausgestaltung der Laser-Hybrid-Schweißkopf nunmehr auch bei schwer zugänglichen Stellen eingesetzt werden kann.

Weiters wird nachfolgend eine Crossjet-Leitvorrichtung mit einem Gehäuse zur Erzeugung bzw. Bildung eines Crossjets, insbesondere einer Crossjetstrahlung, der bevorzugt über zumindest eine Zuleitung und eine Ableitung mit einer Druckluftversorgungsanlage zur Zuführung einer Druckluft verbunden ist und das Gehäuse der Crossjet-Leitvorrichtung eine durchgehende Öffnung für einen sich durch die Öffnung erstreckenden Laserstrahl aufweist, beschrieben. Dabei ist vorgesehen, dass in Stirnflächen der Öffnung ein Austrittskanal und ein gegenüberliegender Eintrittskanal für eine Druckluft, insbesondere für den Crossjet bzw. der Crossjetstrahlung, angeordnet sind, und dass der Eintrittskanal einen größeren Durchmesser bzw. eine größere Querschnittsfläche als der Austrittskanal aufweist, und dass die Zuführung und Abführung der Druckluft zu dem Austrittskanal und dem Eintrittskanal für den Crossjet auf einer Seite der Crossjet-Leitvorrichtung erfolgt. Vorteilhaft ist hierbei, dass durch eine derartige Ausbildung des Crossjets mit der Crossjet-Leitvorrichtung ein geschlossenes System innerhalb des Gehäuses erzeugt wird, wodurch die Crossjetstrahlung nur innerhalb der Öffnung auftritt und somit keinerlei bzw. nur mehr geringe Luftströme außerhalb dieser Öffnung erzeugt werden. Damit kann ein sehr geringer Abstand des Crossjets bzw. der Crossjet-Leitvorrichtung zum Schweißprozess, insbesondere zum Lichtbogen-Schweißprozess, gebildet werden, so dass die Baugröße des Laser-Hybrid-Schweißkopfes wesentlich verringert wird und somit das Handling des Laser-Hybrid-Schweißkopfes wesentlich verbessert wird.

Die Aufgabe der Erfindung wird dadurch gelöst, dass der Brenner bzw. der Schweißbrenner aus mehreren einzelnen Modulen aufgebaut ist, wobei zumindest ein Modul, insbesondere der Brennerkörper, auf die unterschiedlichsten Fügeprozesse, insbesondere auf einen Schweißprozess oder einem Lötprozess, umrüstbar ist, wie dies im Anspruch 1 beschrieben ist. Vorteilhaft ist hierbei, dass ohne großen Aufwand der Laser-Hybrid-Schweißprozess an die verschiedensten Fügeverfahren, wie das Schweißen oder Löten, angepasst werden kann. Ein weiterer wesentlicher Vorteil liegt auch darin, dass durch die spezielle Ausbildung des Laser-Hybrid-Schweißkopfes eine Automatisierung beim Wechsel des Brennerkörpers auf ein anderes Schweißverfahren erreicht wird.

Weitere vorteilhafte Ausgestaltungen sind in den Ansprüchen 2 bis 7 beschrieben. Die sich daraus ergebenden Vorteile sind der Beschreibung zu entnehmen.

Zum besseren Verständnis der Erfindung wird diese anhand der in den nachfolgenden Figuren gezeigten Ausführungsbeispiele näher erläutert.

Es zeigen:
- Fig. 1: einen Aufbau eines erfindungsgemäßen Laser-Hybrid-Schweißkopfes in Seitenansicht und vereinfachter, schematischer Darstellung;
- Fig. 2: eine Stirnansicht eines Profils für den Laser-Hybrid-Schweißkopf in vereinfachter, schematischer Darstellung;
- Fig. 3: eine Draufsicht auf eine Crossjet-Leitvorrichtung für den Laser-Hybrid-Schweißkopf in vereinfachter, schematischer Darstellung;
- Fig. 4: einen Schnitt durch die Crossjet-Leitvorrichtung gemäß den Linien IV-IV in Fig. 3 in vereinfachter, schematischer Darstellung;
- Fig. 5: einen weiteren Schnitt durch die Crossjet-Leitvorrichtung gemäß den Linien V-V in Fig. 3 in vereinfachter, schematischer Darstellung;
- Fig. 6: eine Draufsicht auf ein weiteres Ausführungsbeispiel des Laser-Hybrid-Schweißkopfes in vereinfachter, schematischer Darstellung;
- Fig. 7: ein Ausführungsbeispiel für den Aufbau des Laser-Hybrid-Schweißkopfes, in vereinfachter, schematischer Darstellung;
- Fig. 8: das Ausführungsbeispiel des Laser-Hybrid-Schweißkopfes gemäß Fig. 7 mit abgehobener Verdeckplatte;
- Fig. 9: ein weiteres Ausführungsbeispiel des Laser-Hybrid-Schweißkopfes für ein Laser-Lötverfahren.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

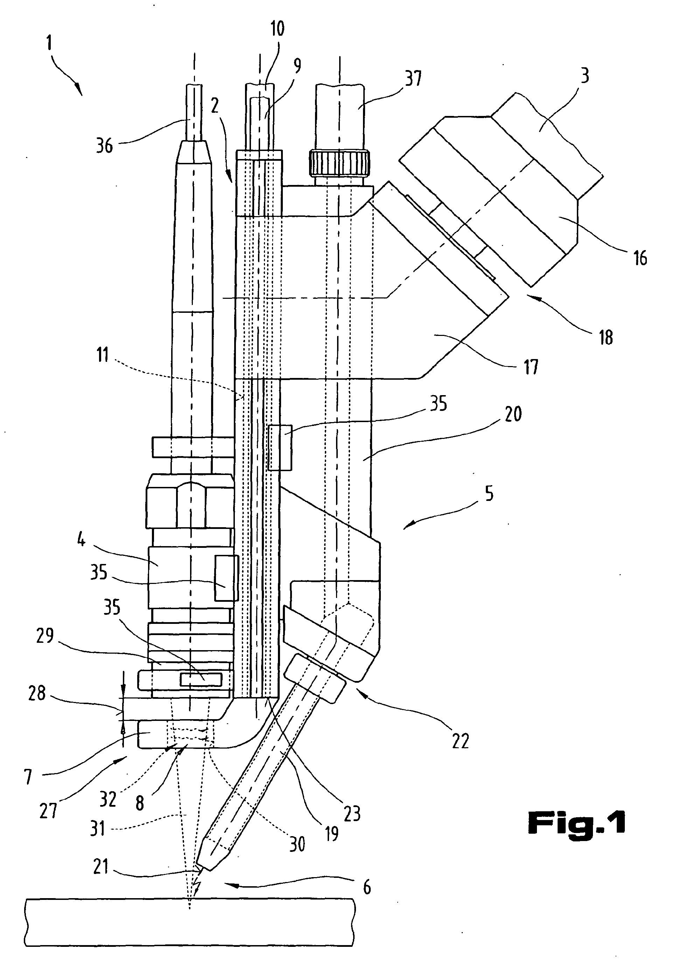

In den Fig. 1 bis 5 ist ein Ausführungsbeispiel für eine Vorrichtung, insbesondere ein Laser-Hybrid-Schweißkopf 1, und ein speziell ausgebildetes Montageelement 2 zur Montage der einzelnen Komponenten des Laser-Hybrid-Schweißkopfes 1 gezeigt.

Bei dem erfindungsgemäßen Laser-Hybrid-Schweißkopf 1 werden handelsübliche, aus dem Stand der Technik bekannte Elemente bzw. Baugruppen in spezieller Kombination zueinander angewandt bzw. eingesetzt. Dabei sind an dem Montageelement 2, das mit einem Roboter, insbesondere einem Roboterarm 3, wie schematisch angedeutet, verbunden wird, ein Laser 4 bzw. eine Laseroptik oder eine optische Fokussiereinheit und Elemente eines Schweißbrenners 5 für einen Lichtbogen-Schweißprozess 6, wie schematisch angedeutet, oder eine Zufuhrvorrichtung für einen Schweißdraht bzw. eine Elektrode sowie eine Crossjet-Leitvorrichtung 7 zur Bildung eines Crossjets 8, die über zumindest eine Zuleitung 9 und eine Ableitung 10 mit einer Druckluftversorgungsanlage - nicht dargestellt - verbunden ist, angeordnet.

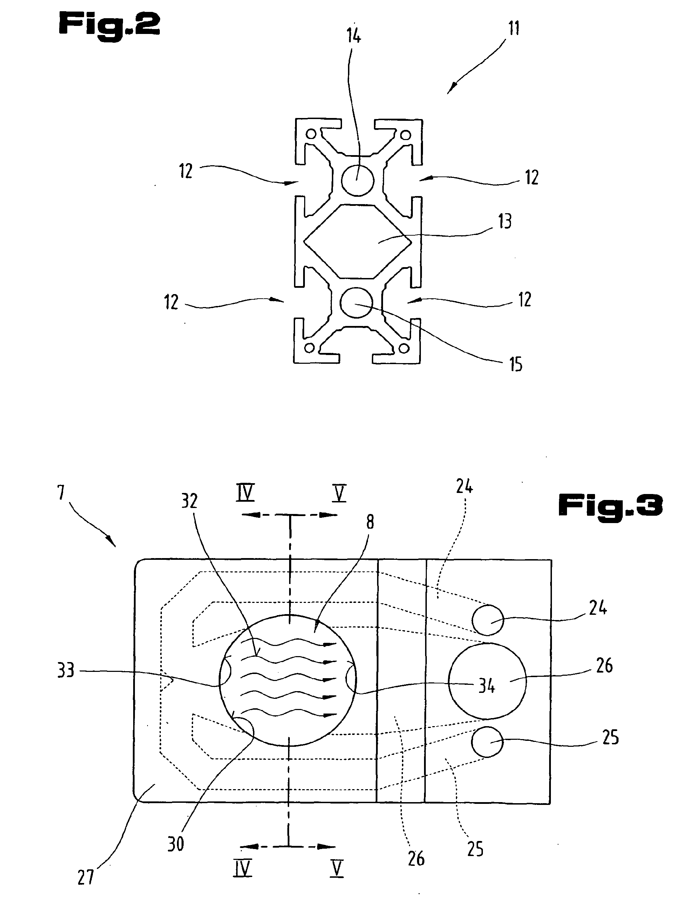

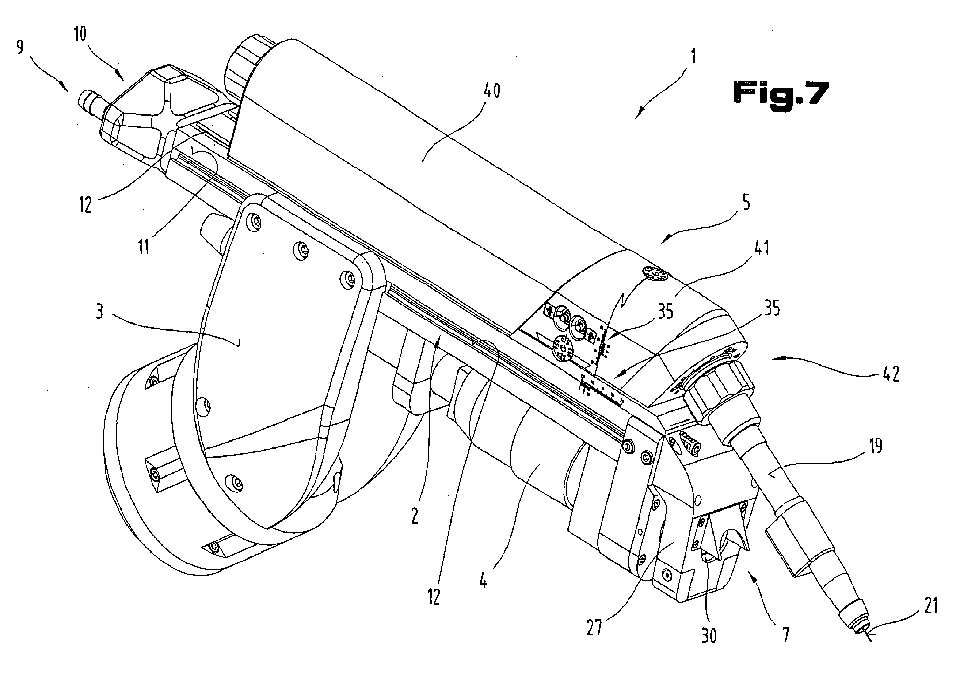

Bei dem erfindungsgemäßen Laser-Hybrid-Schweißkopf 1 ist das Montageelement 2 durch ein Profil 11, entsprechend der Darstellung in Fig. 2, mit Befestigungsnuten 12 für die Komponenten des Laser-Hybrid-Schweißkopfes 1 gebildet. Das Profil 11 ist derart ausgebildet, dass dieses einen im Zentrum verlaufenden, durchgehenden Kanal 13, der bevorzugt die Ableitung 10 ausbildet bzw. mit dieser verbunden ist, aufweist und parallel zu diesem Kanal 13 zwei weitere Kanäle 14, 15, die bevorzugt die Zuleitungen 9 ausbilden bzw. mit diesen verbunden sind, angeordnet sind. Dadurch wird erreicht, dass die Zuleitung 9 und die Ableitung 10 der zugeführten Druckluft für den Crossjet 8, wie schematisch dargestellt, zwischen den beiden Komponenten, insbesondere dem Laser 4 bzw. der Laseroptik oder der optischen Fokussiereinheit und den Elementen des Schweißbrenners 5, angeordnet sind, wobei in dem dargestellten Ausführungsbeispiel der Fig. 1 und 2 nunmehr die Zuleitung 9 und die Ableitung 10 in dem Montageelement 2, insbesondere in dem Profil 11, integriert sind, wodurch die Zuführung und Abführung der Druckluft für den Crossjet 8 auf einer Seite der Crossjet-Leitvorrichtung 7 erfolgt. In dem anschließend beschriebenen bzw. gezeigten Ausführungsbeispiel der Fig. 6 sind die Zuleitung 9 und die Ableitung 10 jedoch nicht mehr in dem Montageelement 2 bzw. in dem Profil 11 integriert, sondern sind parallel verlaufend zum Profil 11 angeordnet, wobei wiederum diese zwischen den beiden Komponenten, insbesondere dem Laser 4 und dem Schweißbrenner 5, angeordnet sind. Bei diesem Ausführungsbeispiel - gemäß Fig. 6 - weißt auch das Profil 11 keinerlei innenliegenden Kanäle 13 bis 15 auf.

Damit eine optimale Befestigung des Profils 11 mit einem Manipulator 16 eines Roboters, insbesondere des Roboterarms 3, erreicht wird, ist das Profil 11 über eine Befestigungsvorrichtung 17 mit dem Manipulator 16 des Roboters verbunden, wie dies die Fig. 1 zeigt. Dabei ist zwischen dem Manipulator 16 des Roboters, insbesondere des Roboterarms 3, und dem Profil 11 eine Abschaltvorrichtung 18 angeordnet. Diese Abschaltvorrichtung 18 dient dazu, dass bei entsprechender Druckausübung auf den Laser-Hybrid-Schweißkopf 1, wie dies beispielsweise bei einem Auflaufen des Laser-Hybrid-Schweißkopfes 1 auf einen Gegenstand der Fall ist, über die Abschaltvorrichtung 18 der Laser-Hybrid-Schweißkopf 1 entsprechend ausweichen kann, wobei zur Aktivierung der Abschaltvorrichtung 18 ein definierter Kraftaufwand notwendig ist. Der wesentliche Vorteil einer derartigen Abschaltvorrichtung 18 liegt darin, dass der Laser-Hybrid-Schweißkopf 1 in einer definierten Lage bzw. Position gehalten wird, wobei bei Auswirkung einer definierten Kraft auf den Laser-Hybrid-Schweißkopf 1 dieser über die Abschaltvorrichtung 18 ausweicht, wobei nach der Ausübung der Kraft der Laser-Hybrid-Schweißkopf 1 wieder in die ursprüngliche Lage bzw. Position über die Abschaltvorrichtung 18 zurückgeführt wird.

Die Elemente des Schweißbrenners 5 sind durch einen Brennerkörper 19 und einem Befestigungskörper 20, in denen sämtliche Bauteile für einen handelsüblichen Brenner integriert sind, gebildet. Der Schweißbrenner 5 ist durch einen MIG/MAG-Schweißbrenner zur Bildung eines MIG/MAG-Schweißprozesses, also eines Lichtbogen-Schweißprozesses 6, ausgebildet, wobei lediglich die einzelnen Elemente des Schweißbrenners 5 gegenüber einen aus dem Stand der Technik bekannten Brenner derart verändert wurden, dass eine einfach Befestigung und Verstellung des Befestigungskörpers 20 am Profil 11 ermöglicht wird und über den Brennerkörper 19 eine sichere Drahtzuführung zum Lichtbogen-Schweißprozess 6 sowie eine sehr gute Kontaktierung eines zugeführten Schweißdrahtes 21 mit Energie, insbesondere mit Strom und Spannung, erreicht wird.

Weiters ist zwischen dem Brennerkörper 19 und dem Befestigungskörper 20 eine weitere Abschaltvorrichtung 22 angeordnet, so dass, wie bereits zuvor beschrieben, eine entsprechende Bewegung des Brennerkörpers 19 gegenüber dem Befestigungskörper 20 bei Ausübung einer entsprechenden Kraft auf diesen ermöglicht wird. Dabei ist diese Abschaltvorrichtung 22 derart ausgelegt, dass eine wesentlich geringe Krafteinwirkung auf den Brennerkörper 19 genügt, um eine entsprechende Bewegung auszulösen, als dies bei der Abschaltvorrichtung 18 für den gesamten Laser-Hybrid-Schweißkopf 1 notwendig ist.

Die eingesetzten Abschaltvorrichtungen 18, 22 weisen dabei einen Sensor - nicht dargestellt - auf, der bei Aktivierung der Abschaltvorrichtungen 18, 22 ein entsprechendes Signal erzeugt. Hierzu sind die Abschaltvorrichtungen 18, 22, insbesondere die Sensoren, mit einer Steuervorrichtung für den Roboter und/oder für ein Schweißgerät - nicht dargestellt - verbunden, so dass bei einer Aktivierung eines oder beider Sensoren dies die Steuervorrichtung erkennen kann. Dadurch kann beispielsweise die weitere Bewegung des Roboterarms 3, also des Laser-Hybrid-Schweißkopfes 1, oder der Schweißprozess gestoppt werden, wodurch eine Zerstörung der einzelnen Komponenten bei einer entsprechenden Krafteinwirkung verhindert wird.

Bei dem erfindungsgemäßen Laser-Hybrid-Schweißkopf 1 ist die Crossjet-Leitvorrichtung 7 an einer Stirnfläche 23 des Profils 11 befestigt, so dass bei dem gezeigten Ausführungsbeispiel - gemäß Fig. 1 - die über die Kanäle 14 und 15 zugeführte Druckluft und die über den Kanal 13 abgeführte Druckluft direkt in die Crossjet-Leitvorrichtung 7 übergeht. Dazu sind im Inneren der Crossjet-Leitvorrichtung 7 entsprechende Kanäle 24 bis 26, die aus einem Gehäuse 27 der Crossjet-Leitvorrichtung 7 ausgeführt sind, angeordnet. Diese Kanäle 24 bis 26 werden dabei auf einer Seite des Gehäuses 27 angeordnet, so dass nur in einem Bereich dieser Seite entsprechende Leitungen, insbesondere die Kanäle 13 bis 15 bzw. die Zuleitung 9 und die Ableitung 10, angeordnet werden müssen.

Die Crossjet-Leitvorrichtung 7 weist bei dem dargestellten Ausführungsbeispiel, wie dies speziell in den Fig. 3 bis 5 dargestellt ist, eine bevorzugt L-förmige Form auf, so dass sich die Crossjet-Leitvorrichtung 7 bevorzugt in einen definierten Abstand 28 unterhalb des Lasers 4 bzw. der Laseroptik oder der optischen Fokussiereinheit oder eines Schutzglases 29 mit einer entsprechenden Schutzglasüberwachung für den Laser 4 erstreckt bzw. ausgebildet ist. Weiters weist das Gehäuse 27 der Crossjet-Leitvorrichtung 7 eine Öffnung 30 bzw. eine Ausnehmung auf, in der der Crossjet 8 ausgebildet ist, d.h., dass die Crossjet-Leitvorrichtung 7 eine Öffnung 30 aufweist, durch die ein schematisch angedeuteter Laserstrahl 31 des Lasers 4 hindurchstrahlt, wobei in einem Winkel bevorzugt von 90° zum Laserstrahl 31 die Druckluft durch die Öffnung 30 hindurchströmt und somit in der Öffnung 30 eine Crossjetstrahlung 32 ausgebildet wird.

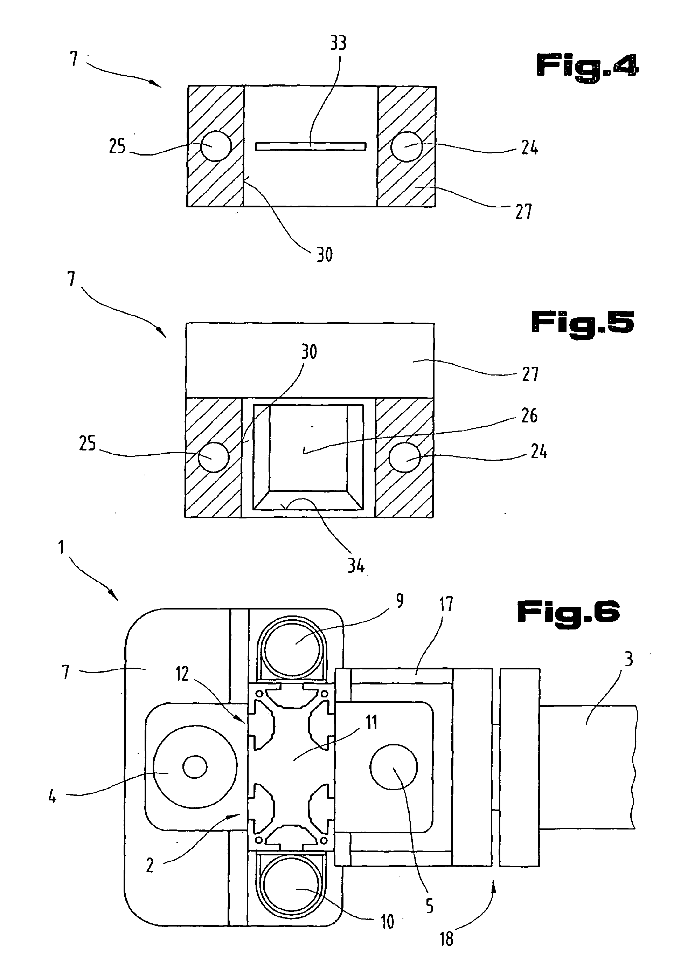

Hierzu ist in den Fig. 3 bis 5 die Crossjet-Leitvorrichtung 7 im Detail dargestellt, wobei in Fig. 3 eine Draufsicht auf das Gehäuse 27 und in den Fig. 4 und 5 jeweils eine Stirnansicht des Gehäuses 27 - gemäß den Schnittlinien IV-IV und V-V in Fig. 3 - dargestellt ist.

Die Crossjet-Leitvorrichtung 7 kann dabei beispielsweise aus einem ein oder mehrteiligen Gussteil oder einem Spritzgussteil aus Aluminium oder Kunststoff gebildet werden. Selbstverständlich ist es möglich, dass jeder beliebige, aus dem Stand der Technik bekannte Aufbau eines Gehäuses 27 verwendet werden kann, wobei lediglich eine entsprechende Ausbildung der Öffnung 30 vorhanden sein muss, wobei die Öffnung 30 im Inneren des Gehäuses mit den Kanälen 24 bis 26 verbunden wird. Im Gehäuse 27 der Crossjet-Leitvorrichtung 7 sind also die Kanäle 24 bis 26 zur Verlängerung der Kanäle 13 bis 15 des Profils 11, also die Verlängerung der Zu- und Ableitungen 9, 10, angeordnet, wobei sich diese in die Öffnung 30 erstrecken und stirnseitig zur Öffnung 30 einen Austrittskanal 33 sowie einen gegenüberliegenden Eintrittskanal 34 ausbilden, d.h., dass in dem Gehäuse 27 der Crossjet-Leitvorrichtung 7 die durchgehende Öffnung 30 für einen sich durch die Öffnung 30 erstreckenden Laserstrahl 31 angeordnet ist, wobei in den Stirnflächen der Öffnung 30 der Austrittskanal 33 und ein gegenüberliegender Eintrittskanal 34 für die Druckluft, insbesondere für den Crossjet 8 bzw. die Crossjetstrahlung 32, angeordnet ist.

Damit wird erreicht, dass die zugeführte Druckluft über den Austrittskanal 33 in die Öffnung 30 ausströmt und an der gegenüberliegenden Seite wieder in den Eintrittskanal 34 einströmt, wodurch die Druckluft einen Luftstrom, insbesondere die Crossjetstrahlung 32, in der Öffnung 30 erzeugt bzw. ausbildet. Dabei kann die Führung der Kanäle 24 bis 26 sowie die Form der Eintritts- und Austrittskanäle 33, 34 beliebig ausgebildet werden und ist nicht auf das dargestellte Ausführungsbeispiel beschränkt. Es muss lediglich gewährleistet sein, dass in der Öffnung 30 der Crossjet-Leitvorrichtung 7 eine Querströmung, also ein so genannter Crossjet 8, ausgebildet wird.

Vorteilhafterweise ist das Gehäuse 27 derart ausgebildet, dass eine Zu- und Abfuhr der Druckluft an einer Stirn- bzw. Seitenfläche erfolgt. Es ist aber ebenfalls möglich, die Zu- und Abfuhr der Druckluft an unterschiedlichen, insbesondere gegenüberliegenden, Stirn- bzw. Seitenflächen des Gehäuses 27 auszuführen.

Weiters ist es möglich, das Gehäuse 27 quaderförmig bzw. L-förmig auszubilden, wobei die Öffnung 30 durch das Gehäuse 27 verläuft und etwa senkrecht auf zwei gegenüberliegende Seitenflächen ausgerichtet ist. Des weiteren kann das Gehäuse 27 einen weiteren Kanal zur Abfuhr zumindest eines Teilstromes der Druckluft aufweisen. Durch die Abfuhr der Druckluft in zumindest zwei Teilströmen kann eine leichtere Abfuhr von Schmutz- bzw. Schweißpartikel erreicht werden.

Die Crossjet-Leitvorrichtung 7, insbesondere der ausgebildete Crossjet 8, hat die Aufgabe, die bei einem Schweißprozess auftretenden Schweißspritzer von der Optik des Lasers 4 bzw. der Laseroptik oder optischen Fokussiereinheit oder dem vor diesen Komponenten angeordneten Schutzglas 29, wie schematisch angedeutet, fernzuhalten. Dabei ist der Crossjet 8 unterhalb des Lasers 4 bzw. der Laseroptik oder der optischen Fokussiereinheit, also zwischen dem Laser 4 und dem Bereich des durchzuführenden Schweißprozesses des Lasers 4 bzw. des Schweißbrenners 5, angeordnet. Die Crossjet-Leitvorrichtung 7, insbesondere der Cross-jet 8, ist derartig ausgebildet, dass von dieser die Crossjetstrahlung 32, insbesondere ein Luftstrom, wie schematisch mit Pfeilen in Fig. 3 angedeutet, erzeugt wird. Der Crossjet 8, insbesondere die Crossjetstrahlung 32, weist dabei bevorzugt eine Strömungsgeschwindigkeit zwischen 100 und 600 m/s und/oder einen Crossjetdruck zwischen 2,5 und 6 bar auf. Dabei kann der Crossjet 8 eine Überschallströmung erzeugen, wobei in der Crossjet-Leitvorrichtung 7 eine so genannte Lavaldüse ausgebildet ist.

Damit die Crossjetstrahlung 32, insbesondere die Druckluft, aus dem Bereich des Laser-Hybrid-Schweißkopfes 1, insbesondere aus dem Bereich des Lichtbogen-Schweißprozesses 6, abgeleitet werden kann, ist in der Crossjet-Leitvorrichtung 7 ein entsprechender Kanal 26 für die Ableitung der Crossjetstrahlung 32 ausgelegt, d.h., dass die über die Kanäle 24, 25 der Crossjet-Leitvorrichtung 7 erzeugte Crossjetstrahlung 32 in der Öffnung 30 der Crossjet-Leitvorrichtung 7 in den Kanal 26 einströmt und von diesem in den Kanal 13, insbesondere in die Ableitung 10, im Profil 11 weitergeleitet wird, so dass die von der Crossjetstrahlung 32 aufgenommenen Schweißspritzer, insbesondere die in Richtung des Lasers 4 bzw. der Laseroptik oder optischen Fokussiereinheit geschleuderten Materialien, über die Ableitung 10 aus dem Bereich des Laser-Hybrid-Schweißkopfes 1 geleitet werden. Dabei wird die Ableitung 10 beispielsweise mit einer Absaugvorrichtung verbunden, so dass ein entsprechender Unterdruck in der Ableitung 10, also ein Absaugen der Crossjetstrahlung 32 aus der Öffnung 30 der Crossjet-Leitvorrichtung 7, geschaffen wird. Damit eine verbesserte Abführung der Crossjetstrahlung 32 über den Eintrittskanal ermöglicht wird, weist der Eintrittskanal 34 ein größeres Volumen als der Austrittskanal 33 auf.

Wesentlich ist bei einem derartigen Laser-Hybrid-Schweißkopf 1, dass die Anordnung des Crossjets 8 in einem bestimmten Abstand zum Lichtbogen-Schweißprozess 6 erfolgt, da bei diesem eine entsprechende Schutzgasatmosphäre - nicht dargestellt - geschaffen wird, und somit bei zu geringem Abstand der Crossjet-Leitvorrichtung 7 diese Schutzgasatmosphäre durch einen um den Crossjet 8 entstehenden Unterdruck in Richtung des Crossjets 8 gezogen wird. Dadurch könnte der Lichtbogen-Schweißprozess 6 nicht mehr in der notwendigen Schutzgasatmosphäre durchgeführt werden.

Durch eine derartige Ausbildung des Crossjets 8 wird mit der Crossjet-Leitvorrichtung 7 ein fast geschlossenes System innerhalb des Gehäuses 27 erzeugt, so dass keinerlei bzw. nur mehr geringe Luftströme außerhalb der Öffnung 30 der Crossjet-Leitvorrichtung 7 gebildet werden. Damit kann ein sehr geringer Abstand des Crossjets 8 bzw. der Crossjet-Leitvorrichtung 7 zum Schweißprozess, insbesondere zum Lichtbogen-Schweißprozess 6, gebildet werden, so dass die Baugröße des Laser-Hybrid-Schweißkopfes 1 wesentlich verringert wird und somit das Handling des Laser-Hybrid-Schweißkopfes 1 wesentlich verbessert wird. Selbstverständlich ist es möglich, dass eine derartige Crossjet-Leitvorrichtung 7 auch bei anderen Anwendungen, wie beispielsweise einem reinen Laser-Schweißprozess, zum Schutz des Lasers 4 bzw. der Laseroptik oder der optischen Fokussiereinheit vor Rauch oder losen Metallteilen eingesetzt werden kann. Der wesentliche Vorteil liegt darin, dass die Crossjetstrahlung 32 nur innerhalb der Öffnung 30 auftritt und somit keinerlei bzw. nur mehr geringe Luftströme außerhalb dieser Öffnung 30 erzeugt werden.

Durch die spezielle Ausbildung der Crossjet-Leitvorrichtung 7 wird weiters erreicht, dass nur eine eingeschränkte Angriffsfläche für den Laser 4 geschaffen wird, da über die Crossjet-Leitvorrichtung 7, insbesondere über das Gehäuse 27, selbst, die losen Metallteile bzw.

Schweißspritzer oder der Rauch abgehalten werden und somit nur in dem Bereich der Öffnung 30, durch den der Laserstrahl 31 hindurchstrahlt, diese Teile zum Laser 4 bzw. der Laseroptik oder der optischen Fokussiereinheit vordringen können. Damit wird bereits ein Großteil der Teile von dem Gehäuse 27 abgehalten, wobei die restlichen Teile über die Crossjetstrahlung 32 in der Öffnung 30 gefördert werden. Somit ist ein Vordringen von Schweißspritzern zum Laser 4 fast unmöglich. Wesentlich ist hierbei auch, dass durch die Einschränkung dieses Raumes auf die Öffnung 30 nunmehr eine einfache Ausbildung und eine einfache Erzeugung des Crossjets 8 ermöglicht wird, da dieser nicht mehr großflächig wirken muss, wie dies bei offenen Systemen aus dem Stand der Technik der Fall ist. Hierzu ist es beispielsweise möglich, dass die Crossjet-Leitvorrichtung 7 bzw. das Gehäuse 27 derart ausgebildet ist, dass diese zumindest teilweise den zugeordneten Laser 4 bzw. die Laseroptik oder die optische Fokussiereinheit umschließt bzw. der Abstand 28 von dem Gehäuse 27 zum Laser 4 durch eine entsprechende Ausbildung des Gehäuses 27 geschlossen wird, so dass auch ein seitliches Eindringen von Schmutz oder anderen Fremdkörpern zu den zu schützenden Teilen, wie dem Laser 4 bzw. der Laseroptik oder der optischen Fokussiereinheit, unterbunden werden kann und nur mehr ein Zugang über die Öffnung 30 möglich ist. Dabei ist es möglich, dass in diesem Bereich, also zwischen dem Laser 4 und der Crossjet-Leitvorrichtung 7 ein Überdruck ausgebildet wird, wobei dieser Überdruck von der Zuleitung 9 abgezweigt wird. Dies kann in einfacher Form derartig erfolgen, dass zumindest einer der Kanäle 24 oder 25 zumindest eine Bohrung in Richtung des Lasers 4 aufweist, wodurch ein Teil der zugeführten Druckluft über diese Bohrung in Richtung des Lasers 4 austreten kann und somit in diesem Bereich oberhalb des Gehäuses 27 ein entsprechender Überdruck ausgebildet werden kann.

Weiters weist der erfindungsgemäße Laser-Hybrid-Schweißkopf 1 eine oder mehrere Anzeigeeinheiten 35 - wie schematisch angedeutet - auf, über die die Positionen der Komponenten zueinander angezeigt werden, d.h., dass ausgehend von einer vordefinierten Position bzw. Ausgangsstellung die Komponenten, insbesondere der Laser 4 und der Schweißbrenner 5, diese in X-, Y- und Z-Richtung zueinander verstellt werden können, wobei diese Verstellvorgänge über die Anzeigeeinheit 35 angezeigt bzw. abgelesen werden kann, so dass jederzeit eine abermalige Einstellung der beiden Komponenten zueinander wiederholt werden kann. Damit kann der Laser-Hybrid-Schweißkopf 1 für die unterschiedlichen Schweißvorgänge verstellt werden, wobei in einfacher Form eine Rückstellung auf die entsprechenden Ausgangswerte möglich ist.

Dabei ist es beispielsweise möglich, dass die einzelnen Komponenten, insbesondere der Laser 4 und der Schweißbrenner 5, mit einer aus dem Stand der Technik bekannten elektronischen Aufnahmevorrichtung bzw. Messvorrichtung für mechanische Verstellwege - nicht dargestellt - gekoppelt sind, wobei diese Werte der Aufnahmevorrichtung über die Anzeigeeinheit 35 angezeigt werden können. Hierzu ist es möglich, dass die Anzeigeeinheit 35 direkt am Laser-Hybrid-Schweißkopf 1 oder beispielsweise in einem zentralen Steuergerät angeordnet ist, wobei hierzu die Aufnahmevorrichtung die Werte über Leitungen an die Anzeigeeinheit 35 oder eine Steuervorrichtung übersendet. Somit wird erreicht, dass jederzeit eine Reproduzierung einer Einstellung des Laser-Hybrid-Schweißkopfes 1 auf elektronischem Wege möglich ist. Selbstverständlich ist es möglich, dass bei entsprechender Befestigung der einzelnen Komponenten auf einem elektronischen Verstellsystem die Verstellung automatisiert werden kann, so dass lediglich nur mehr der Wert der Verschiebung eingestellt werden muss, worauf über das entsprechende Verstellsystem die Verstellung vorgenommen wird.

Der Vollständigkeit halber wird noch erwähnt, dass die einzelnen Komponenten über Leitungen mit den entsprechenden Versorgungsgeräten verbunden werden, wie dies schematisch angedeutet wurde. Hierzu wird der Laser 4 über eine Versorgungsleitung 36 mit einer entsprechenden Energiequelle verbunden. Weiters wird der Schweißbrenner 5 über ein Schlauchpaket 37 mit einem Schweißgerät verbunden. Es ist auch möglich, dass anstelle der Energiequelle für den Laser 4 dieser direkt mit dem Schweißgerät verbunden wird, wobei die Energie für den Laser 4 und dem Schweißbrenner 5 vom Schweißgerät geliefert wird.

Durch die spezielle Ausbildung des Laser-Hybrid-Schweißkopfes 1 wird erreicht, dass keinerlei Leitungen bis in den Bereich des Schweißprozesses angeordnet sind, da diese alle auf der gegenüberliegenden Seite mit den Komponenten verbunden werden. Damit wird erreicht, dass ein Hängen bleiben des Laser-Hybrid-Schweißkopfes 1 an einer Leitung bzw. einem Gegenstand unterbunden wird, da keinerlei abstehende Leitungen um die Komponenten angeordnet sind. Somit wird auch die Möglichkeit geschaffen, dass der Laser-Hybrid-Schweißkopf 1 ohne Veränderung des Roboters, insbesondere dessen programmierte Laufbahn, spiegelbildlich eingesetzt werden kann, da auf keine abstehenden Leitungen oder Teile acht genommen werden muss, so dass durch die spezielle Ausgestaltung der Laser-Hybrid-Schweißkopf 1 nunmehr auch bei schwer zugänglichen Stellen eingesetzt werden kann.

In dem weiteren Ausführungsbeispiel - gemäß Fig. 6 - ist der Laser-Hybrid-Schweißkopf 1 in Draufsicht dargestellt, wobei wiederum im Zentrum das Profil 11 angeordnet ist. An diesem Profil 11 sind die einzelnen Komponenten, wie bereits zuvor beschrieben, befestigt.

Wie bereits zuvor erwähnt, sind die Zuleitung 9 und die Ableitung 10 jedoch nicht mehr in dem Montageelement 2 bzw. in dem Profil 11 integriert, sondern sind parallel verlaufend zum Profil 11 angeordnet bzw. an diesem befestigt, wobei diese zwischen den beiden Komponenten, insbesondere dem Laser 4 und dem Schweißbrenner 5, angeordnet sind bzw. verlaufen. Bei diesem Ausführungsbeispiel weißt auch das Profil 11 keinerlei innenliegenden Kanäle 13 bis 15 auf.

Weiters wird durch diese Anordnung gewährleistet, dass wiederum ein symmetrischer Aufbau des Laser-Hybrid-Schweißkopfes 1 ohne abstehende Leitungen erzielt wird. Da für die Befestigung der einzelnen Komponenten handelsübliche Befestigungssysteme eingesetzt werden, wird auf eine spezielle Beschreibung des Aufbaus verzichtet, da dieser den zuvor beschriebenen Ausführungsbeispielen in den Fig. 1 bis 5 annähernd gleicht.

Es wird lediglich darauf hingewiesen, dass bei den gezeigten Ausführungsbeispielen der Fig. 1 bis 6 die Montage der Komponenten, insbesondere des Lasers 4 bzw. der Laseroptik oder der optischen Fokussiereinheit und dem Schweißbrenner 5, auf beiden Seiten des Montageelementes 2, insbesondere des Profils 11, erfolgt, wogegen aus dem bekannten Stand der Technik die Laser-Hybrid-Schweißköpfe derartig aufgebaut sind, dass der Laser und der Schweißbrenner nur auf einer Seite einer Montageplatte angeordnet sind, wogegen auf der gegenüberliegenden Seite die Verbindung mit dem Roboter, insbesondere mit dem Roboterarm, erfolgt. Durch eine derartige Anordnung wird ein übermäßig breiter und somit schwer handzuhabender Laser-Hybrid-Schweißkopf 1 geschaffen.

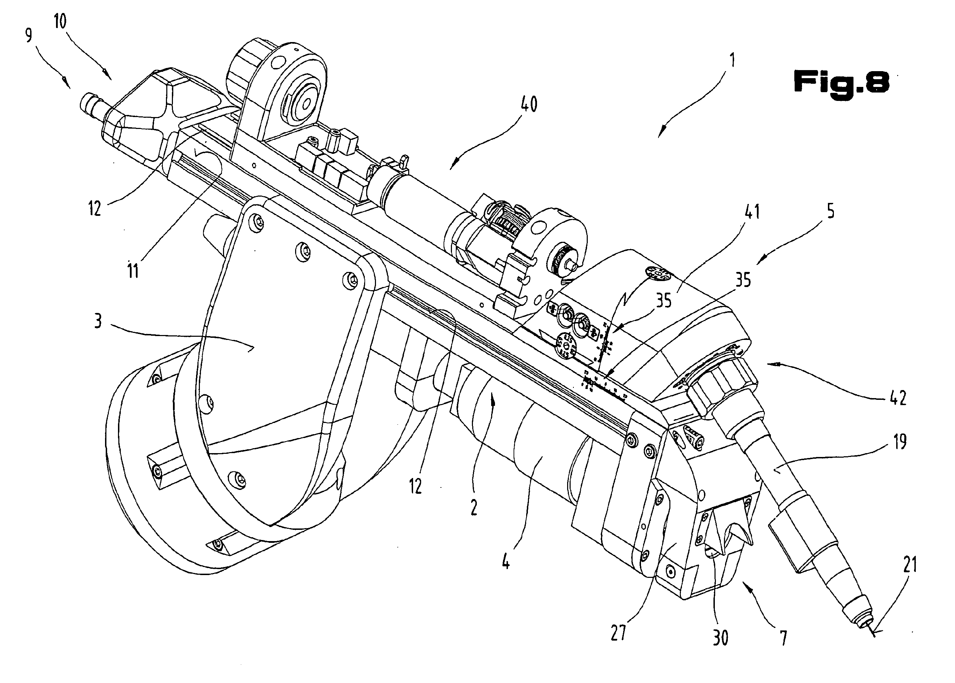

In den Fig. 7 bis 9 ist ein weiteres Ausführungsbeispiel eines modularen Laser-Hybrid-Brenners bzw. eines modularen Laser-Hybrid-Schweißkopfes 1 gezeigt, bei dem an zumindest einem Montageelement 2, insbesondere am Profil 11, Komponenten wie ein Laser 4 bzw. eine Laseroptik oder eine optische Fokussiereinheit und Elemente eines Brenners bzw. eines Schweißbrenners 5 für einen Schweißprozess angeordnet sind. Weiters weist der modulare Laser-Hybrid-Brenner eine Vorrichtung zur Bildung eines Crossjets 8 (nicht dargestellt), insbesondere die Crossjet-Leitvorrichtung 7, die über zumindest eine Zuleitung 9 und eine Ableitung 10 mit einer Druckluftversorgungsanlage, nicht dargestellt, verbunden ist, auf.

Der Brenner bzw. der Schweißbrenner 5 ist aus mehreren einzelnen Modulen aufgebaut, wobei zumindest ein Modul, insbesondere der Brennerkörper 19, auf die unterschiedlichsten Fügeprozesse, insbesondere auf einen Schweißprozess oder einen Lötprozess, umrüstbar ist. Dabei kann durch Austausch des Brennerkörpers 19 dieser nunmehr zur Bildung eines MIG/MAG-Schweißverfahrens, eines TIG/WIG-Schweißverfahrens, eines Doppeldraht-Schweißverfahrens, eines Plasma-Schweißverfahrens oder für ein Laser-Kaltdraht-Löten, ein Laser-Heißdraht-Löten, ein Laser-Schweißen ohne Lichtbogen ausgebildet sein, d.h., dass unterschiedliche Brennerkörper 19 für unterschiedliche Fügeprozesse mit einem Modul des Schweißbrenners 5 verbunden werden können, so dass mit ein und demselben Laser-Hybrid-Schweißkopf 1 unterschiedliche Verfahren durchgeführt werden können, ohne dass dabei der gesamte Schweißbrenner 5, insbesondere die Module, ausgetauscht werden müssen.

Dadurch wird in vorteilhafter Weise erreicht, dass ein sehr rasches Umrüsten des Laser-Hybrid-Brenners auf die unterschiedlichsten Schweißverfahren möglich ist. Ein besonderer Vorteil liegt vor allem darin, dass der Wechsel des Brennerkörpers 19, aufgrund der modularen Ausbildung automatisiert werden kann, und somit dieser Tausch über einen Werkzeugwechsel, wie dies in der Robotertechnologie üblich ist, vorgenommen werden kann. Dabei hat es sich als besonders vorteilhaft herausgestellt, dass eventuelle zusätzliche Komponenten bzw. Zusatzmodule, wie beispielsweise eine externe Drahtzufuhrvorrichtung oder ein weiterer Schweißbrenner 5 bzw. Brennerkörper 19, nicht dargestellt, bereits am Profil 11 befestigt sind bzw. diese mit dem Brennerkörper 19 verbunden werden, so dass keine mechanischen Änderungen bzw. Einstellungen mehr vorgenommen werden müssen.

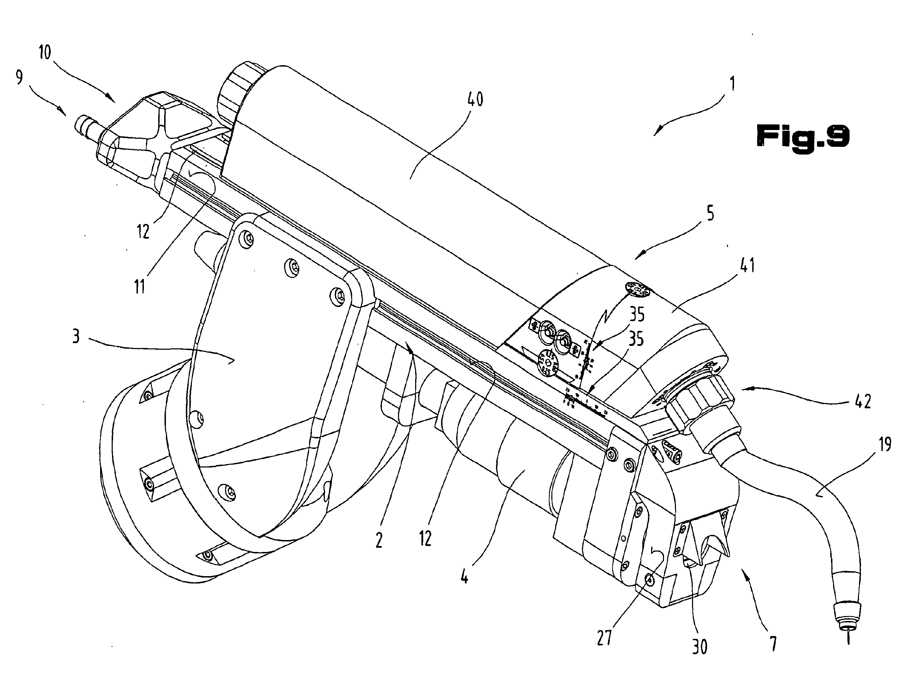

Der Schweißbrenner 5 ist dabei aus einem Antriebsmodul 40, einem Befestigungsmodul 41 und dem Brennerkörper 19 gebildet, wobei weitere Zusatzmodule, wie beispielsweise ein externes Drahtzuführungsmodul, anschließbar sind. Damit ein Wechsel des Brennerkörpers 19 vorgenommen werden kann, ist der Brennerkörper 19 über eine Verbindungsvorrichtung 42, insbesondere über eine Schraubverbindung oder Steckverbindung, mit dem Befestigungsmodul 41 des Schweißbrenners 5 verbunden. Die einzelnen Module, insbesondere das Antriebsmodul 40 und das Befestigungsmodul 41, sind an dem Profil 11 befestigt, wogegen der Brennerkörper 19 am Befestigungsmodul 41 des Schweißbrenners befestigt ist. Somit können bei einem Tausch des Brennerkörpers 19 die Positionen der am Profil 11 befestigten Module bestehen bleiben, so dass sich die Einstellungen gegenüber dem Laser 5, insbesondere dem Laserstrahl, nicht ändern. Damit wird erreicht, dass die weiteren Brennerkörper 19 in ihrer Länge entsprechend ausgebildet werden können, so dass jederzeit ein optimaler Schweißprozess durchgeführt werden kann. Die einzelnen Brennerkörper 19 werden bevorzugt immer mit der gleichen Brennerlänge hergestellt und als Präzisionsbauteil ausgebildet. Hierbei können jedoch die Brennerkörper 19 unterschiedliche Formen aufweisen, wie dies beispielsweise in Fig. 9 ersichtlich ist. Bei dieser Ausführungsform ist der Brennerkörper 19 für einen Lötprozess konzipiert, wobei die Zuführung des Schweißmaterials, insbesondere des Schweißdrahtes 21, in einem anderen Winkel als für einen Schweißprozess erfolgt.

Weiters ist es möglich, dass die Zusatzmodule ebenfalls am Profil 11 befestigt werden. Hierzu ist es möglich, dass dabei am Profil entsprechende Befestigungssysteme vormontiert werden, so dass wiederum eine automatisierte Montage bzw. Demontage möglich ist. Durch die kombinierte Ausbildung des Schweißbrenners 5 für das Löten und das Schweißen ist es nunmehr möglich, dass bei einem Lötprozess eine Schutzgasatmosphäre aufgebaut werden kann, da sämtliche Zuleitungen hierfür vorhanden sind.

Der Ordnung halber sei abschließend darauf hingewiesen, dass zum besseren Verständnis des Laser-Hybrid-Schweißkopfes 1 dieser bzw. dessen Bestandteile teilweise unmaßstäblich und/oder vergrößert und/oder verkleinert dargestellt wurden.

### Bezugszeichenaufstellung

- 1: Laser-Hybrid-Schweißkopf
- 2: Montageelement
- 3: Roboterarm
- 4: Laser
- 5: Schweißbrenner

- 6: Lichtbogen-Schweißprozess
- 7: Crossjet-Leitvorrichtung
- 8: Crossjet
- 9: Zuleitung
- 10: Ableitung

- 11: Profil
- 12: Befestigungsnut
- 13: Kanal
- 14: Kanal
- 15: Kanal

- 16: Manipulator
- 17: Befestigungsvorrichtung
- 18: Abschaltvorrichtung
- 19: Brennerkörper
- 20: Befestigungskörper

- 21: Schweißdraht
- 22: Abschaltvorrichtung
- 23: Stirnfläche
- 24: Kanal
- 25: Kanal

- 26: Kanal
- 27: Gehäuse
- 28: Abstand
- 29: Schutzglas
- 30: Öffnung

- 31: Laserstrahl
- 32: Crossjetstrahlung
- 33: Austrittskanal
- 34: Eintrittskanal
- 35: Anzeigeeinheit

- 36: Versorgungsleitung
- 37: Schlauchpaket
- 38:
- 39:
- 40: Antriebsmodul

- 41: Befestigungsmodul
- 42: Verbindungsmodul

## Patentansprüche

1. Modularer Laser-Hybrid-Schweißkopf (1), bei dem an zumindest einem Montageelement (2) Komponenten wie ein Laser (4) bzw. eine Laseroptik oder eine optische Fokussiereinheit und Elemente eines Brenners bzw. eines Schweißbrenners (5) für einen Fügeprozess angeordnet sind und dieser eine Vorrichtung zur Bildung eines Crossjets (8), die über zumindest eine Zuleitung (9) und eine Ableitung (10) mit einer Druckluftversorgungsanlage verbunden ist, aufweist, **dadurch gekennzeichnet, dass** der Brenner bzw. der Schweißbrenner (5) aus mehreren einzelnen Modulen aufgebaut ist, wobei zumindest ein Modul, insbesondere der Brennerkörper (19), auf die unterschiedlichsten Fügeprozesse, insbesondere auf einen Schweißprozess oder einen Lötprozess, umrüstbar ist, und wobei die Zuleitung (9) und die Ableitung (10) in dem Montageelement (2) integriert sind.

2. Modularer Laser-Hybrid-Schweißkopf nach Anspruch 1, **dadurch gekennzeichnet, dass** der Brenner bzw. der Schweißbrenner (5), insbesondere der Brennerkörper (19), zur Bildung eines MIG/MAG-Schweißverfahrens, eines TIG/WIG-Schweißverfahrens, eines Doppeldraht-Schweißverfahrens, eines Plasma-Schweißverfahrens oder für ein Laser-Kaltdraht-Löten, ein Laser-Heißdraht-Löten, ein Laser-Schweißen ohne Lichtbogen ausgebildet ist.

3. Modularer Laser-Hybrid-Schweißkopf nach Anspruch 1 oder 2, **dadurch gekennzeichnet, dass** bei der Ausbildung des Schweißbrenners (5), insbesondere des Brennerkörpers (19), zum Löten eine Schutzgasatmosphäre aufgebaut ist.

4. Modularer Laser-Hybrid-Brenner nach einem der vorhergehenden Ansprüche, **dadurch gekennzeichnet, dass** der Brennerkörper (19) über ein Verbindungsmodul (42), insbesondere über eine Schraubverbindung oder Steckverbindung, mit einem Befestigungsmodul (41) des Schweißbrenners (5) verbunden ist.

5. Modularer Laser-Hybrid-Brenner nach einem der vorhergehenden Ansprüche, **dadurch gekennzeichnet, dass** der Schweißbrenner aus einem Antriebsmodul (40), einem Befestigungsmodul (41) und dem Brennerkörper (19) gebildet ist, wobei weitere Zusatzmodule, wie beispielsweise ein externes Drahtzuführungsmodul, anschließbar sind.

6. Modularer Laser-Hybrid-Brenner nach einem der vorhergehenden Ansprüche, **dadurch gekennzeichnet, dass** die einzelnen Module, insbesondere das Antriebsmodul (40) und das Befestigungsmodul (41) an einem Profil (11) befestigt sind, wogegen der Brennerkörper (19) am Befestigungsmodul (41) des Schweißbrenners (5) befestigt ist.

7. Modularer Laser-Hybrid-Brenner nach einem der vorhergehenden Ansprüche, **dadurch gekennzeichnet, dass** die Zusatzmodule ebenfalls am Profil (11) befestigt sind.

## Claims

1. Modular laser hybrid welding head (1), in which components such as a laser (4) and laser optics or an optical focussing unit and elements of a torch or welding torch (5) for a joining process are disposed on a mounting element (2) which is connected to a device for forming a cross-jet (8), which is connected by at least an incoming line (9) and an outgoing line (10) to a compressed air supply system, **characterised in that** the torch or welding torch (5) is made up of several individual modules, and at least one module, in particular the torch head (19), can be fitted with different equipment in order to carry out different joining processes, in particular a welding process or a soldering process, and the incoming line (9) and the outgoing line (10) are integrated in the mounting element (2).

2. Modular laser hybrid welding head as claimed in claim 1, **characterised in that** the torch or welding torch (5), in particular the torch body (19), is designed for running a MIG/MAG welding process, a TIG/WIG welding process, a double rod welding process, a plasma welding process or for a laser cold rod soldering process, a laser hot rod soldering process, a laser soldering process without an arc.

3. Modular laser hybrid welding head as claimed in claim 1 or 2, **characterised in that** the design of the welding torch (5), in particular the torch body (19), is such that a protective gas atmosphere is created for the soldering process.

4. Modular laser hybrid torch as claimed in one of the preceding claims, **characterised in that** the torch body (19) is connected to an attachment module (41) of the welding torch (5) by means of a connection module (42), in particular by means of a screw connection or plug-in connection.

5. Modular laser hybrid torch as claimed in one of the preceding claims, **characterised in that** the welding torch comprises a drive module (40), an attachment module (41) and the torch body (19), and other add-on modules can be connected, such as an external rod feed module, for example.

6. Modular laser hybrid torch as claimed in one of the preceding claims, **characterised in that** the individual modules, in particular the drive module (40) and the attachment module (41), are attached to a profile (11), whereas the torch body (19) is attached to the attachment module (41) of the welding torch (5).

7. Modular laser hybrid torch as claimed in one of the preceding claims, **characterised in that** the add-on modules are also attached to the profile (11).

## Revendications

1. Tête de soudage hybride laser (1) modulaire, sur laquelle des composants comme un laser (4) ou une optique laser ou une unité de focalisation optique et des éléments d'un chalumeau ou d'un chalumeau à souder (5) pour un processus d'assemblage sont disposés sur au moins un élément de montage (2) et ce chalumeau présente un dispositif pour la formation d'un jet transversal (8), qui est relié par au moins une arrivée (9) et une évacuation (10) à une installation d'alimentation en air comprimé, **caractérisée en ce que** le chalumeau ou le chalumeau de soudage (5) est constitué de plusieurs modules individuels, sachant qu'au moins un module, en particulier le corps de chalumeau (19), peut être adapté au niveau de l'équipement aux processus d'assemblage les plus divers, en particulier un processus de soudage ou un processus de brasage, et que l'arrivée (9) et l'évacuation (10) sont intégrées dans l'élément de montage (2).

2. Tête de soudage hybride laser modulaire selon la revendication 1, **caractérisée en ce que** le chalumeau ou le chalumeau à souder (5), en particulier le corps de chalumeau (19), est conçu pour la formation d'un procédé de soudage MIG/MAG, d'un procédé de soudage TIG/WIG, d'un procédé de soudage à fil double, d'un procédé de soudage au plasma ou pour un brasage à fil froid au laser, un brasage à fil chaud au laser, un soudage au laser sans arc.

3. Tête de soudage hybride laser modulaire selon la revendication 1 ou 2, **caractérisée en ce que**, lors de la réalisation du chalumeau de soudage (5), en particulier du corps de chalumeau (19), une atmosphère de gaz protecteur est mise en place pour le brasage.

4. Chalumeau hybride laser modulaire selon l'une quelconque des revendications précédentes, **caractérisé en ce que** le corps du brûleur (19) est relié par un module de liaison (42), en particulier par un assemblage vissé ou un assemblage à enfichage, à un module de fixation (41) du chalumeau de soudage (5).

5. Chalumeau hybride laser modulaire selon l'une quelconque des revendications précédentes, **caractérisé en ce que** le chalumeau de soudage est formé d'un module d'entraînement (40), d'un module de fixation (41) et du corps de brûleur (19), sachant que d'autres modules supplémentaires, comme par exemple un module externe d'alimentation en fil, peuvent être raccordés.

6. Chalumeau hybride laser modulaire selon l'une quelconque des revendications précédentes, **caractérisé en ce que** les modules individuels, en particulier le module d'entraînement (40) et le module de fixation (41) sont fixés sur un profilé (11), alors que le corps du brûleur (19) est fixé sur le module de fixation (41) du chalumeau de soudage (5).

7. Chalumeau hybride laser modulaire selon l'une quelconque des revendications précédentes, **caractérisé en ce que** les modules supplémentaires sont fixés également sur le profilé (11).
